# EUROPÄISCHE PATENTSCHRIFT

(11) **EP 1 272 584 B1**
(45) Veröffentlichungstag und Bekanntmachung des Hinweises auf die Patenterteilung: **10.03.2004**
(21) Anmeldenummer: 01951508.9
(22) Anmeldetag: 17.05.2001
(51) Int. Cl.: C09J 7/02

(54) **VERWENDUNG EINES HOCHDICHTEN PAPIERTRÄGERS ALS TRÄGERBAHN IN EINEM ABDECKMATERIAL FÜR EIN KLEBEBAND**
USE OF A HIGH DENSITY PAPER SUPPORT AS A SUPPORT STRIP IN A COVER MATERIAL FOR AN ADHESIVE TAPE
UTILISATION D'UN SUPPORT PAPIER A HAUTE DENSITE COMME BANDE SUPPORT DANS UN MATERIAU DE RECOUVREMENT POUR UN RUBAN ADHESIF

(30) Priorität: 20.05.2000 DE 10025081; 05.12.2000 DE 10060409
(43) Veröffentlichungstag der Anmeldung: 08.01.2003
(73) Patentinhaber: Tesa AG, 20253 Hamburg (DE)
(72) Erfinder: WIECK, Andreas, 25469 Halstenbek (DE)
(86) Internationale Anmeldenummer: PCT/EP2001/005654
(87) Internationale Veröffentlichungsnummer: WO 2001/090269

(56) Entgegenhaltungen:
- EP-A- 0 845 517
- EP-A- 1 072 664
- WO-A-00/10781
- US-A- 4 405 401

## Beschreibung

Die Erfindung betrifft die Verwendung eines hochdichten Papierträgers als Trägerbahn in einem Abdeckmaterial für ein Klebeband, ein Abdeckmaterial mit Stanzformteilen sowie die Verwendung des Abdeckmaterials mit Stanzformteilen.

Teile, welche durch ein doppelseitiges Klebeband befestigt werden sollen (zum Beispiel elektronische Bauteile oder Dichtungen in Mobilfunktelefonen) erfordern je nach Anwendungsfall den Einsatz doppelseitig klebender Stanzteile. Diese Stanzteile müssen vorab in einem Stanzprozess, insbesondere im sogenannten kiss cut-Prozeß, in die erforderliche Form konfektioniert werden, wobei zuvor das Abdecken des zur Herstellung der Stanzteile vorliegenden Klebebands mit einem antiadhäsiv ausgerüsteten Material erforderlich ist.

Das kiss-cut-Verfahren ist dadurch ausgezeichnet, daß beim Stanzen das antiadhäsiv ausgerüstete Material nicht oder nur unwesentlich verletzt beziehungsweise angestanzt wird.
Auf diese Weise wird vermieden, daß nach dem Stanzen Kleber der Stanzteile in die Einschnitte fließt und mit dem Material verklebt. Sollte dies geschehen, könnte in nachfolgenden Produktionsschritten, in denen das Material mit den Stanzteilen weiterverarbeitet werden soll, das Material spalten. Damit wäre die gesamte Rolle von der Weiterverarbeitung ausgeschlossen und somit Abfall.

Als antiadhäsiv ausgerüstetes Material eignet sich insbesondere antiadhäsiv ausgerüstetes Trennpapier, zum Beispiel basierend auf unterschiedlich hochverdichteten Papierkörpem (sowie Trennfolien basierend auf PET, PP, PE).

Insbesondere werden an papierbasierende antiadhäsiv ausgerüstete Materialien im Konfektionierprozess hohe Anforderungen an die Materialdicke, die Dickenkonstanz (geringe Toleranzen) und Planlage (Dimensionsstabilität) gestellt. Sogenannte hochverdichtete antiadhäsiv ausgerüstete Glassine-Papiere, wie sie üblicherweise eingesetzt werden, sind aufgrund mangelnder Planlageeigenschaften insbesondere unter klimatischen Extrembedingungen nur sehr begrenzt einsetzbar.

Aufgabe der Erfindung ist es, einen Papierträger zur Verfügung zu stellen, der aufgrund seiner Planlageeigenschaften und Dickenkonstanz für den Konfektionierprozess von klebenden Stanzformteilen geeignet ist.

Gelöst wird diese Aufgabe durch die Verwendung eines Papierträgers als Trägerbahn in einem Abdeckmaterial für ein Klebeband, wie er im Hauptanspruch niedergelegt ist. Die Unteransprüche betreffen vorteilhafte Fortbildungen des Erfindungsgegenstands sowie besonders vorteilhafte Verwendungen desselben.

Demgemäß betrifft die Erfindung die Verwendung eines Papierträgers mit einer Dichte von 1,1 bis 1,25 g/cm³ als Trägerbahn in einem Abdeckmaterial für ein Klebeband, wobei der Papierträger im wesentlichen eine obere und eine untere Seite aufweist.
Der Papierträger ist auf der oberen und/oder auf der unteren Seite mit einer Kunststoffbeschichtung versehen, wobei zumindest auf einer der gegebenenfalls vorhandenen zwei Kunststoffbeschichtungen eine antiadhäsive Schicht aufgetragen ist.

Vorzugsweise weist der Papierträger eine Dichte auf von 1,12 bis 1,2 g/cm³, insbesondere 1,14 bis 1,16 g/cm³.
Weiter vorzugsweise weist der Papierträger ein Flächengewicht von 40 bis 120 g/m², bevorzugt 50 bis 110 g/m², ganz besonders bevorzugt 60 bis 100 g/m², auf.

In einer weiteren vorteilhaften Ausbildung der Erfindung ist der Papierträger ein hochverdichtetes Glassine-Papier, der auf der oberen und auf der unteren Seite mit einer Kunststoffbeschichtung versehen ist, wobei auf beiden Kunststoffbeschichtungen eine antiadhäsive Schicht, insbesondere eine Silikonbeschichtung, aufgetragen ist.

Als Kunststoffbeschichtung werden insbesondere Polyolefine wie LDPE, HDPE, Mischungen der beiden zuvorgenannten, zum Beispiel MDPE, PP oder PTE verwendet. Ganz besonders vorteilhaft ist LDPE.

Die polybeschichteten Seiten des Papierträgers aus LDPE oder HDPE sind darüber hinaus matt oder glänzend herstellbar.

Weiter vorzugsweise wird die Kunststoffbeschichtung mit 5 bis 30 g/m², bevorzugt 10 bis 25 g/m², ganz besonders bevorzugt 15 bis 20 g/m², aufgetragen.
Insbesondere bei Polyester kann der Auftrag auch bereits bei 2 bis 3 g/m² erfolgen.

Darüber hinaus stellt eine hervorragende Ausbildung der Erfindung die Tatsache dar, wenn als antiadhäsive Schichten zum Beispiel Silikon, Paraffin, Teflon oder Wachse verwendet werden. Dann können silikonfreie Trennschichten, zum Beispiel "non Silicone" von der Fa. Rexam, oder silikonarme Trennschichten, zum Beispiel "Lo ex" von der Fa. Rexam, eingesetzt werden.
Je nach Anwendungsfall des erfindungsgemäßen Trennmaterials ist es möglich, die antiadhäsiven Schichten auf beiden Seiten des Trennmaterials gleich oder unterschiedlich trennend auszugestalten, also auch auf beiden Seiten voneinander verschiedene Trenneigenschaften einzustellen (controlled release).

Vorzugsweise wird lösemittelfrei beschichtetes Silikon eingesetzt.
Weiter vorzugsweise wird das lösemittelfrei beschichtete Silikon mit 0,8 bis 3,7 g/m², bevorzugt 1,3 bis 3,2 g/m², ganz besonders bevorzugt 1,8 bis 2,8 g/m², aufgetragen.

Aber auch lösemittelhaltige Systeme sind möglich, und zwar mit einer Auftragsmenge von insbesondere 0,3 bis 1 g/m².

Auf diese Weise ist gewährleistet, daß das Abdeckmaterial bei beidseitiger Polybeschichtung
- dimensionsstabile Eigenschaften (gute Planlage)
- eine geringe Dicke mit hoher Dickenkonstanz (enge Toleranzen, präzisere Stanzschnitte)
- und eine Schutzschicht gegen Anstanzungen des Papierkörpers
   aufweist oder daß das Abdeckmaterial bei einseitiger Polybeschichtung
- eine geringe Dicke mit hoher Dickenkonstanz (enge Toleranzen, präzisere Stanzschnitte) und
- eine Schutzschicht gegen Anstanzungen des Papierkörpers
   aufweist.

Die Dimensionsstabilität wird für Anwendungen insbesondere unter kritischen Klimata (hohe Luftfeuchte und Temperatur) und großen Materialbreiten-/flächen (wide width lamination) vorzugsweise nur durch beidseitig polybeschichtete Kraftpapiere erfüllt, für andere Anwendungen ist bezüglich der Anforderungen im Konfektionierprozeß eine einseitige Polybeschichtung des Kraftliners ausreichend.
In beiden Fällen wird durch die Polybeschichtung neben den bereits beschriebenen Vorteilen auf jeden Fall ein Schutz des Papierkörpers vor Anstanzungen erreicht

Schließlich umfaßt der Erfindungsgedanke ein Abdeckmaterial mit Stanzformteilen erhältlich in einem Konfektionierprozeß von ein- oder doppelseitig klebenden Stanzformteilen, wobei auf das Abdeckmaterial ein ein- oder doppelseitiges Klebeband aufgelegt wird, aus dem insbesondere im kiss-cut-Prozeß Sianzformteile ausgestanzt werden.
Gerade wenn das Abdeckmaterial zur Eindeckung von einseitig klebenden Bändern vorgesehen ist, reicht es vollkommen, wenn das Abdeckmaterial auf der einzudeckenden Seite mit einer antiadhäsiven Beschichtung versehen ist.

Bevorzugt wird das Abdeckmaterial mit doppelseitig klebenden Stanzformteilen zur Verklebung von Bauteilen in elektronischen Geräten wie Telefonen, insbesondere Mobiltelefonen verwendet.

Prinzipiell sind alle Arten von einseitig oder doppelseitig beschichteten Klebebändem als Basismaterial für die klebenden Stanzlinge geeignet, wobei als Trägermaterialbahn für diese zum Beispiel Papier, Vliese und Kunststoff unterschiedlichster Art möglich sind.

Weiter vorzugsweise weist das Klebeband eine Dicke von 20 bis 320 µm, bevorzugt 80 bis 260 µm, ganz besonders bevorzugt 130 bis 210 µm, auf.

Als Klebemassen für die Klebebänder können alle Haftklebemassen, wie sie zum Beispiel im SATAS, Handbook of Pressure Sensitive Adhesive Technology, Third Edition, erwähnt sind, eingesetzt werden. Insbesondere eignen sich Natur-/Synthese- kautschuk- und acrylatbasierende Klebemassen, die aus der Schmelze oder Lösung aufgetragen werden können.

Die erfindungsgemäß eingesetzte Trennmaterialbahn bietet zusammen mit dem klebenden Produkt Vorteile, die derartig nicht vorherzusehen gewesen sind.

Der erfindungsgemäß eingesetzte Papierträger, der antiadhäsiv ausgerüstet, dünn und bei beidseitiger Polybeschichtung dimensionsstabil ist, ist aufgrund seiner vorteilhaften Planlageeigenschaften und Dickenkonstanz für den Konfektionierprozess der klebenden Stanzformteile hervorragend geeignet.

Dies ermöglicht insbesondere der Einsatz von Polyolefin-/PTE beschichteten, hochverdichteten Glassine-Papieren, die durch ihre geringere Materialdicke mit geringen Dickentoleranzen vorzugsweise im Stanzprozess (kiss cut) eingesetzt werden können.

Insbesondere wird durch den beidseitig polybeschichteten Papierträger in dem Abdeckmaterial die Kombination aus Abdeckmaterial und Klebeband sehr dimensionsstabil, was für den nachfolgenden Stanzvorgang förderlich ist.

Im folgenden wird anhand einer Figur sowie eines Beispiels eine bevorzugte Ausführungsform des gesamten Produktaufbaues dargestellt. Das doppelseitig mit einer abhäsiven Beschichtung ausgerüstete Abdeckmaterial 3 ist mit einem doppelseitig klebenden Band 2 zu einer Rolle 1 aufgewickelt.
Nach Abwicklung des Produktes liegt das klebende Produkt 2 auf der oberen Seite des antiadhäsiv ausgerüsteten Trennmaterials 3 und kann in die Konfektioniereinrichtung (Stanze) einlaufen.

### Beispiel

Das mit dem Trennmaterial gemäß Ansprüchen ausgerüstete Klebeband kann im rotativen Stanzverfahren zu hochwertigen Stanzformteilen konfektioniert werden. Dabei wird das Klebeband zusammen mit dem Trennmaterial abgerollt und über eine Gegendruckwalze unterhalb des relativen Stanzmessers hindurchgeführt. Dabei werden je nach Stanzgeometrie von dem klebenden Produkt auf der Trennmaterialabdeckung Formteile erzeugt, die nach Abzug und Verwerfung des verbleibenden Gittemetzes wieder aufgewickelt werden. In diesem Schritt wird eine weitere Hilfsabdeckung einkaschiert, mit der die offene Seite des Klebebandes abgedeckt wird.

Folgende Bestandteile werden für einen erfindungsgemäßen Papierträger sowie die Stanzteile eingesetzt:

| | |
|---|---|
| Trennmaterialabdeckung | 64 g/m² Glassine-Papier |
| | je Seite 15 g/m² LDPE |
| | je Seite ca. 1,6 g/m² eines lösemittelfreien Silikonsystems |
| Klebeband | 48 µm starkes Klebeband mit einem PTE Träger |

In einer alternativen Ausführungsform sieht der Papierträger sowie die Stanzteile wie folgt aus:

| | |
|---|---|
| Trennmaterialabdeckung | 64 g/m² Glassine-Papier |
| | einseitig 15 g/m² LDPE |
| | je Seite ca. 1,6 g/m² eines lösemittelfreien Silikonsystems |
| Klebeband | 48 µm starkes Klebeband mit einem PTE Träger |

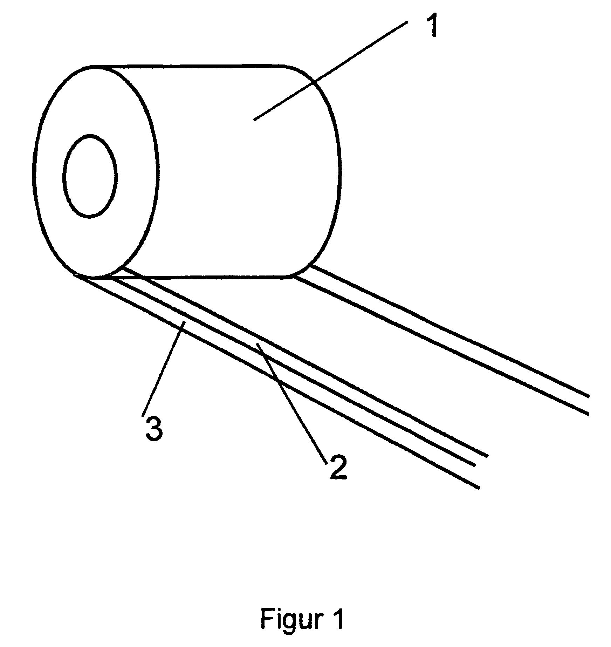

## Patentansprüche

1. Verwendung eines Papierträgers mit einer Dichte von 1,1 bis 1,25 g/cm³ als Trägerbahn in einem Abdeckmaterial für ein Klebeband, wobei
der Papierträger im wesentlichen eine obere und eine untere Seite aufweist,
der Papierträger auf der oberen und auf der unteren Seite mit einer Kunststoffbeschichtung versehen ist und
zumindest einseitig auf der Kunststoffbeschichtung eine antiadhäsive Schicht aufgetragen ist.

2. Verwendung nach Anspruch 1, **dadurch gekennzeichnet, dass** der Papierträger eine Dichte aufweist von 1,12 bis 1,2 g/cm³, insbesondere 1,14 bis 1,16 g/cm³.

3. Verwendung nach den Ansprüchen 1 und 2, **dadurch gekennzeichnet, dass** als Papierträger ein hochverdichtetes Glassine-Papier eingesetzt wird.

4. Verwendung nach den Ansprüchen 1 bis 3, **dadurch gekennzeichnet, dass** als Kunststoffbeschichtung Polyolefine wie LDPE, HDPE, PP oder PTE verwendet werden.

5. Verwendung nach den Ansprüchen 1 bis 4, **dadurch gekennzeichnet, dass** die antiadhäsive Schicht beidseitig auf die Kunststoffbeschichtung aufgetragen ist.

6. Verwendung nach den Ansprüchen 1 bis 5, **dadurch gekennzeichnet, dass** als antiadhäsive Schichten silikonfreie oder silikonarme Schichten oder Silikon, Paraffin, Teflon oder Wachse eingesetzt sind.

7. Abdeckmaterial mit einem Papierträger mit einer Dichte von 1,1 bis 1,25 g/cm³, wobei der Papierträger im wesentlichen eine obere und eine untere Seite aufweist,
der Papierträger auf der oberen und auf der unteren Seite mit einer Kunststoffbeschichtung versehen ist und
zumindest einseitig auf der Kunststoffbeschichtung eine antiadhäsive Schicht aufgetragen ist,
sowie mit Stanzformteilen erhältlich in einem Konfektionierprozess zur Herstellung von einseitig klebenden Stanzformteilen, wobei auf das Abdeckmaterial ein einseitiges Klebeband aufgelegt ist, aus dem insbesondere im kiss-cut-Prozess Stanzformteile ausgestanzt werden.

8. Abdeckmaterial mit einem Papierträger mit einer Dichte von 1,1 bis 1,25 g/cm³, wobei der Papierträger im wesentlichen eine obere und eine untere Seite aufweist,
der Papierträger auf der oberen und auf der unteren Seite mit einer Kunststoffbeschichtung versehen ist und
zumindest einseitig auf der Kunststoffbeschichtung eine antiadhäsive Schicht aufgetragen ist,
sowie mit Stanzformteilen erhältlich in einem Konfektionierprozess zur Herstellung von doppelseitig klebenden Stanzformteilen, wobei auf das Abdeckmaterial ein doppelseitig Klebeband aufgelegt ist, aus dem insbesondere im kiss-cut-Prozess Stanzformteile ausgestanzt werden.

9. Verwendung des Abdeckmaterials mit Stanzformteilen nach Anspruch 8 zur Verklebung von Bauteilen in Telefonen, insbesondere Mobiltelefonen.

## Claims

1. Use of a paper carrier having a density of from 1.1 to 1.25 g/cm³ as a carrier web in a lining material for an adhesive tape,
the paper carrier essentially having a top side and a bottom side,
the paper carrier being provided with a polymer coating on the top side and on the bottom side, and
an antiadhesive layer having been applied to at least one side of the polymer coating.

2. Use according to Claim 1, **characterized in that** the paper carrier has a density of from 1.12 to 1.2 g/cm³, in particular from 1.14 to 1.16 g/cm³.

3. Use according to Claim 1 or 2, **characterized in that** the paper carrier is a highly densified glassine paper.

4. Use according to any of Claims 1 to 3, **characterized in that** the polymer coating comprises polyolefins such as LDPE, HDPE, PP or PTE.

5. Use according to any of Claims 1 to 4, **characterized in that** the antiadhesive layer is applied to both sides of the polymer coating.

6. Use according to any of Claims 1 to 5, **characterized in that** silicone-free or low-silicone coats or silicone, paraffin, Teflon or waxes are used as antiadhesive layers.

7. Lining material with a paper carrier having a density of from 1.1 to 1.25 g/cm³, the paper carrier essentially having a top side and a bottom side,
the paper carrier being provided with a polymer coating on the top side and on the bottom side, and
an antiadhesive layer having been applied to at least one side of the polymer coating,
and also with diecuts obtainable in a converting operation for producing single sidedly adhering diecuts, in which a single sided adhesive tape is placed onto the lining material and diecuts are punched from said tape, in particular in a kiss-cutting operation.

8. Lining material with a paper carrier having a density of from 1.1 to 1.25 g/cm³, the paper carrier essentially having a top side and a bottom side,
the paper carrier being provided with a polymer coating on the top side and on the bottom side, and
an antiadhesive layer having been applied to at least one side of the polymer coating,
and also with diecuts obtainable in a converting operation for producing double sidedly adhering diecuts, in which a double sided adhesive tape is placed onto the lining material and diecuts are punched from said tape, in particular in a kiss-cutting operation.

9. Use of the lining material with diecuts according to Claim 8 for adhesively bonding components in telephones, especially mobile telephones.

## Revendications

1. Utilisation d'un support papier présentant une densité de 1,1 à 1,25 g/cm³ comme bande support dans un matériau de recouvrement pour une bande adhésive, le support papier présentant essentiellement une face supérieure et une face inférieure, le support papier étant pourvu sur sa surface supérieure et sa surface inférieure d'un revêtement en matériau synthétique et une couche anti-adhésive étant appliquée au moins d'un côté sur le revêtement en matériau synthétique.

2. Utilisation selon la revendication 1, **caractérisée en ce que** le support papier présente une densité de 1,12 à 1,2 g/cm³, en particulier de 1,14 à 1,16 g/cm³.

3. Utilisation selon les revendications 1 et 2, **caractérisée en ce qu'**on utilise comme support papier un papier glassine hautement comprimé.

4. Utilisation selon les revendications 1 à 3, **caractérisée en ce qu'**on utilise comme revêtement en matériau synthétique des polyoléfines telles que le LDPE, le HDPE, le PP ou le PTE.

5. Utilisation selon les revendications 1 à 4, **caractérisée en ce que** la couche anti-adhésive est appliquée des deux côtés sur le revêtement en matériau synthétique.

6. Utilisation selon les revendications 1 à 5, **caractérisée en ce qu'**on utilise comme couches anti-adhésives des couches exemptes de silicone ou pauvres en silicone ou du silicone, de la paraffine, du téflon ou des cires.

7. Matériau de recouvrement avec un support papier présentant une densité de 1,1 à 1,25 g/cm³, le support papier présentant essentiellement une face supérieure et une face inférieure, le support papier étant pourvu sur sa surface supérieure et sa surface inférieure d'un revêtement en matériau synthétique et une couche anti-adhésive étant appliquée au moins d'un côté sur le revêtement en matériau synthétique, ainsi qu'avec des pièces découpées pouvant être obtenues dans un procédé de confection pour la fabrication de pièces découpées adhésives monoface, une bande adhésive monoface, dans laquelle on découpe des pièces par estampage, en particulier dans le procédé de découpage par effleurement (kiss-cut), étant placée sur le matériau de recouvrement.

8. Matériau de recouvrement avec un support papier présentant une densité de 1,1 à 1,25 g/cm³, le support papier présentant essentiellement une face supérieure et une face inférieure, le support papier étant pourvu sur sa surface supérieure et sa surface inférieure d'un revêtement en matériau synthétique et une couche anti-adhésive étant appliquée au moins d'un côté sur le revêtement en matériau synthétique, ainsi qu'avec des pièces découpées pouvant être obtenues dans un procédé de confection pour la fabrication de pièces découpées adhésives double face, une bande adhésive double face, dans laquelle on découpe des pièces par estampage, en particulier dans le procédé de découpage par effleurement (kiss-cut), étant placée sur le matériau de recouvrement.

9. Utilisation du matériau de recouvrement avec des pièces découpées selon la revendication 8 pour le collage de pièces dans des téléphones, en particulier des téléphones portables.
